Europäisches Patentamt

(19) European Patent Office

Office européen des brevets

(11) Publication number: **0 155 982 B1**

## EUROPEAN PATENT SPECIFICATION

(45) Date of publication of patent specification: **11.09.91**

(21) Application number: **84108691.1**

(22) Date of filing: **19.06.81**

Divisional application 87118167 filed on 08.12.87.

(51) Int. Cl.⁵: **G06K 19/08**, G07F 7/08

(60) Publication number of the earlier application in accordance with Art.76 EPC: **0 054 071**

(54) **Authenticator device.**

(30) Priority: **23.06.80 US 161838**

(43) Date of publication of application:
**02.10.85 Bulletin 85/40**

(45) Publication of the grant of the patent:
**11.09.91 Bulletin 91/37**

(84) Designated Contracting States:
**AT CH DE FR GB LI LU NL SE**

(56) References cited:
**WO-A-80/01010**      **WO-A-81/00776**
**DE-A- 2 829 778**      **FR-A- 2 229 099**
**FR-A- 2 324 060**      **US-A- 3 636 318**
**US-A- 4 025 759**      **US-A- 4 034 211**

(73) Proprietor: **LIGHT SIGNATURES, INC.**
**6171 West Century Boulevard**
**Los Angeles California 90045(US)**

(72) Inventor: **Goldman, Robert Norman**
**157 Lanipo Drive**
**Kailua Hawaii 96734(US)**

(74) Representative: **Coles, Graham Frederick**
**Sommerville & Rushton et al**
**11 Holywell Hill**
**St Albans Hertfordshire AL1 1EZ(GB)**

Rank Xerox (UK) Business Services

## Description

This invention relates to authenticator devices of the kind for verifying the authenticity of a product, person, document or other subject, in which a sheet medium has a region that occupies at least part of the sheet and includes particles distributed therein for providing variation from one location to another within the region of response to incident light, and there is associated with the sheet medium a machine-readable representation of this response as measured at one specific location at least, of the region.

An authenticator device of this specified kind is already known from German Patent Specification No 28 29 778 A1, in the form of a credit card having a region, notably a signature area of the card, that includes a fluorescent line. The line is formed by a random distribution of coarse-grained fluorescent pigments which fluoresce in response to light of a certain wavelength incident on the line. The fluorescent emission from the particles varies from one location to another along the line in accordance with the random distribution of the particles. In this respect, light is emitted only from the randomly-distributed pigments, and not from the spaces between them, or where the fluorescent line has been, for example, overwritten with the cardholder's signature. Thus, photoelectric sensing of the light emission along the line, produces a test signal that varies in a manner uniquely characteristic of the card, and this signal can be compared with an associated record of an earlier sensing of the same card for the purpose of verifying the integrity of the card.

There are disadvantages inherent in this known form of authenticator device, in particular in the use of fluorescent pigments, and it is an object of the present invention to provide an alternative form of device of the specified kind having practical and economic advantages.

According to the present invention an authenticator device of the specified kind is characterised in that the machine-readable representation is borne by the sheet medium, that the response to incident light is produced by a reflecting surface of the sheet medium, that the particles are sand-like particles carried by the reflecting surface, and that the sand-like particles modify the measurable reflectivity from one location to another within said region by obscuring the reflecting surface.

The use of reflectivity, and variation of this from one location to another, as the basis for establishing a unique characteristic of the device for verification purposes, is of practical advantage more especially because of simplicity and ease of provision. Although the above-mentioned German patent specification refers to reflection in the context of the light emitted from the fluorescent particles of the known authenticator device, a reflecting surface is not involved in that case, and the variation in response to the incident light arises from fluorescence rather than from reflectivity.

An authenticator device including particles which differ in reflectivity from the base material that incorporates them, is proposed in French Patent Specification 2,324,060. However, even in this case, the verifiable characteristic is not achieved in the ready and economic way of the present invention, namely, using sand-like particles carried by a reflecting surface to modify measurable reflectivity from one location to another simply by obscuring the reflecting surface.

The reflecting surface may be provided readily by a layer of foil on the sheet medium.

The sheet material, which may be of paper or other, paper-like material, may have a translucency that varies from one location to another of the device outside the region involving the sand-like particles, and may then bear a machine-readable representation of the translucency as measured at specific ones of such locations. The representation of translucency may be used as a further basis for verification of the authenticator device of the present invention; authenticator devices utilizing translucency as a criterion for verification are described and claimed in Applicant's European Patent No 0 054 071 (from which the present patent application is divided).

Production of the authenticator device may be carried out using a method which includes the steps of specifying at least one location of the region, measuring the reflectivity at that location, and then recording a representation of the measure of reflectivity obtained, on the sheet medium. Data in accordance with the measure of reflectivity may be cryptographically encoded before being recorded, and the method may also include the step of recording data indicative of the location to which the measure of reflectivity relates.

Verification of the authenticator device may be carried out by a method that includes the steps of machine-reading from the device the representation of measured reflectivity, freshly measuring the reflectivity at one specific location at least, of the region that includes the particles, and then comparing the freshly-obtained measure of reflectivity with the representation read out from the device. The location or locations from which the fresh measure or measures of reflectivity are obtained, may be determined by data read from the device.

The medium of the authenticator device of the present invention, may for example, comprise part of a product, part of a tag attached to a product, part of an identification device, part of a document of value, and so on. As a further aspect of the invention, the device may be implemented so that only a portion of the medium is utilized, and the location of that select portion is preserved in secrecy along with the measured reflectivity characteristic.

The device may be variously implemented using different media and techniques. The reflectivity characteristic representation may, for example, be cryptographically encoded by a computer apparatus, and may be recorded optically or magnetically on the authenticator medium.

An authenticator device in accordance with the present invention will now be described, by way of exemplary embodiment, with reference to the accompanying drawings, in which:

FIGURE 1 is a plan view of an identification card in accordance with the present invention;

FIGURES 2, 3 and 4 are sectional views taken through the card of FIGURE 1 on lines 12-12, 13-13 and 14-14 respectively;

FIGURE 5 is a fragmentary diagrammatic view of a recording format on the card of FIGURE 1;

FIGURE 6 is a block diagram of a system for utilizing the card of FIGURE 1; and

FIGURE 7 is a diagrammatic view of a component of the system of FIGURE 6.

As indicated above, a detailed illustrative embodiment of the present invention is disclosed herein. However, physical identification media, data formats, and operating systems structured in accordance with the present invention may be embodied in a wide variety of forms, some of which may be quite different from those of the disclosed embodiment. Consequently, the specific structural and functional details disclosed herein are merely representative; yet in that regard, they are deemed to afford the best embodiment for purposes of disclosure and to provide a basis for the claims herein which define the scope of the present invention.

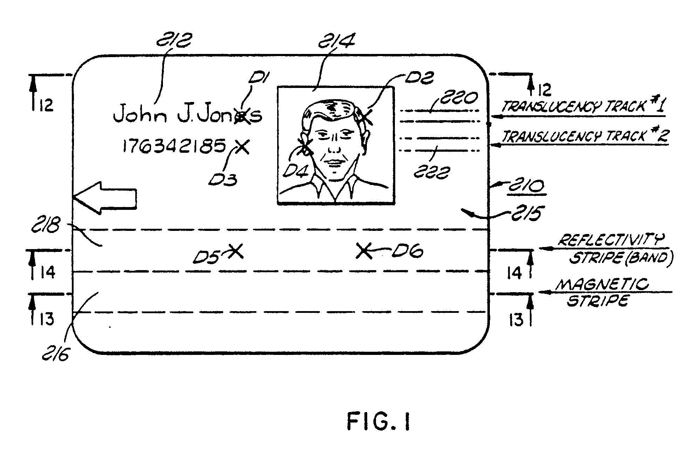

The present invention can be effectively used to implement a reliable identification card 210 as illustrated in FIGURE 1, to which reference will now be made.

The card 210 is a laminate article incorporating a basic sheet, e.g. bond paper 215 (see FIGURES 1, 2 and 3), along with certain other media for verification indications.

Considering the format of the card 210 (FIGURE 1), assume for example that it is adapted for use as a form of personal identification. Of course, certain of the aspects as disclosed herein may be readily adopted for use in a wide variety of documents including passports, valuable paper, authenticators, and so on.

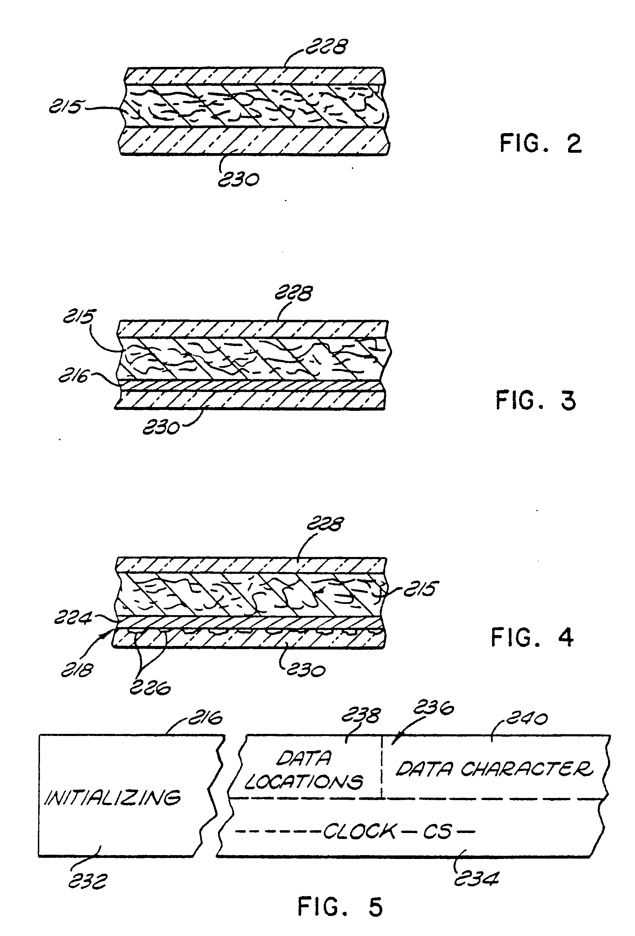

In the illustrative form, the card 210 carries print 212 (upper left) indicating the name of the assigned holder along with a photographic likeness 214 (right). The print 212 and the likeness 214 may be variously deposited or printed on a sheet of bond paper 215 (FIGURE 2). Generally, the print 212 and the likeness 214 alter the translucency of the bond paper 215 in certain specific areas. In general, overlays, erasures or other modifications of the print 212 or the likeness 214 will tend to further alter the translucency of the paper 215 at points of alteration.

In general, in accordance herewith the translucency of predetermined areas involving the print 212 or the likeness 214 is sensed and provided as a record for authenticating the card 210. Indications of the translucency (or various other random characteristics, measurable but not practically duplicable) are carried on the card in a form that is not generally humanly readable. Specifically, in the authenticator embodiment of FIGURE 1, the verification confirmation information is recorded on a magnetic stripe 216 which may also provide various other information.

In the present embodiment, the magnetic stripe 216 incorporates a clock track which not only indexes another magnetic track of the stripe 216 but additionally indexes non-magnetic areas of the card 210 for critical characteristic observations. The characteristic observations include translucency. Additionally, the card 210 incorporates a stripe or band 218 for indicating still another characteristic. Specifically, the band 218 provides dimensional reflectivity variations as a characteristic imposing an exceedingly severe burden for any effort at duplication.

The card 210 might be carried by the assigned holder for identification. An initial confirmation of the holder could be made simply by comparing the likeness 214 on the card with the holder's physical appearance. Confirmation of the card 210 and the absence of modification would then be checked by an apparatus constructed in accordance with the present invention as described in detail below. Generally, checking is performed by scanning the card horizontally along several paths. Specifically, the card 210 is scanned for translucency readings along paths 220 and 222 (translucency tracks 1 and 2) for characteristic data indicative of the bond paper 215 in composite with the print 212 or the likeness 214. Additionally, the card 210 is scanned along the magnetic stripe 216 to obtain confirmatory data. The data from the magnetic stripe designates selected locations along the paths 220 and 222 for translucency observations. The data may also indicate the values of prior observations as well as personal identification data for a subject or holder and data on the extent or limits of use of the card.

The structure of the card 210 includes means for a further confirmation of the authenticity, and is therefore adapted for exceedingly high reliability.

Specifically, the card 210 incorporates a band 218 (reflectivity stripe) in the form of a layer of foil 224 (FIGURE 4) carrying sand-like particles 226. The observed characteristic of the band 218 involves light reflectivity at particular locations. Data indicative of such characteristics are confirmed by apparatus somewhat similar to that employed for confirming the propriety of the translucency observation as mentioned above.

Considering the structural form of the card 210 in somewhat greater detail, the full area of the card is occupied by the bond pager 215 (FIGURES 1, 2 and 3) and a pair of external clear plastic sheet laminates 228 and 230.

In addition to sealing the bond sheet 215, the laminates 228 and 230 also enclose the magnetic stripe 216 and the reflectivity band 218. In general, techniques for the production of laminate identification cards incorporating stripes, e.g., magnetic stripes, are well known.

Turning now to the data format of the card 210 of FIGURE 1, the magnetic stripe 216 involves two recording tracks as well known in the prior art. Of course, additional tracks (also as well known) may be incorporated in alternative embodiments. One of the magnetic recording tracks is a dedicated clock track while the other track carries the following data: the locations of select characteristic areas along the paths 220 and 222; location data for the reflectivity stripe or band 218; values of the characteristics at the specified locations; and optional data including personal identification numbers, account numbers, use records, and so on.

To pursue a specific example of a card format, assume that data locations D1 and D2 (indicated by "X") are assigned in the translucency track 1 (path 220) and locations D3 and D4 (similarly indicated) are assigned in the translucency track 2 (path 222). Again, these locations are indicated by an "X" symbol on the drawing.

Further, assume that data locations D5 and D6 are assigned in the reflectivity band 218. Accordingly, the preliminary processing of the card would involve sensing the characteristic translucency at data locations D1, D2, D3, and D4 and the reflectivity at locations D5 and D6. Data indicating the locations (encoded if desired) along with the observed values of translucency and reflectivity is encoded on the magnetic stripe 216.

To verify a card, a preliminary visual observation might be made concerning the likeness 214 and the identification of the print 212. If such indicators appear satisfactory, machine verification may be pursued to indicate the possibility of either a counterfeit card or an altered card. Specifically, the measurable but not substantially duplicable characteristics at locations D1, D2, D3, D4, D5, and D6 are sensed and compared with the data registered from a prior sensing of such locations. If the card 210 has been modified (as in the likeness 214) or is a forgery, on a statistical basis, it is exceedingly unlikely that the comparative standard will be attained. For even further confirmation regarding tie propriety of the card holder, a personal identification number test, may be incorporated in the magnetic stripe 218 as well known in the prior art.

Prior to considering the system for processing the illustrative card 210, a preliminary consideration of the recording format on the magnetic stripe 216 will be helpful. Reference now will be to FIGURE 5. The initial portion of the magnetic stripe 216 is dedicated to initializing the operation in cooperation with a magnetic card reader. Accordingly, an initializing section 232 occupies the leading edge of the stripe (left as illustrated). Beyond the initializing section 232, the lower portion of the stripe 216 records clock signals CS in a track 234 while the upper portion records data in a track 236.

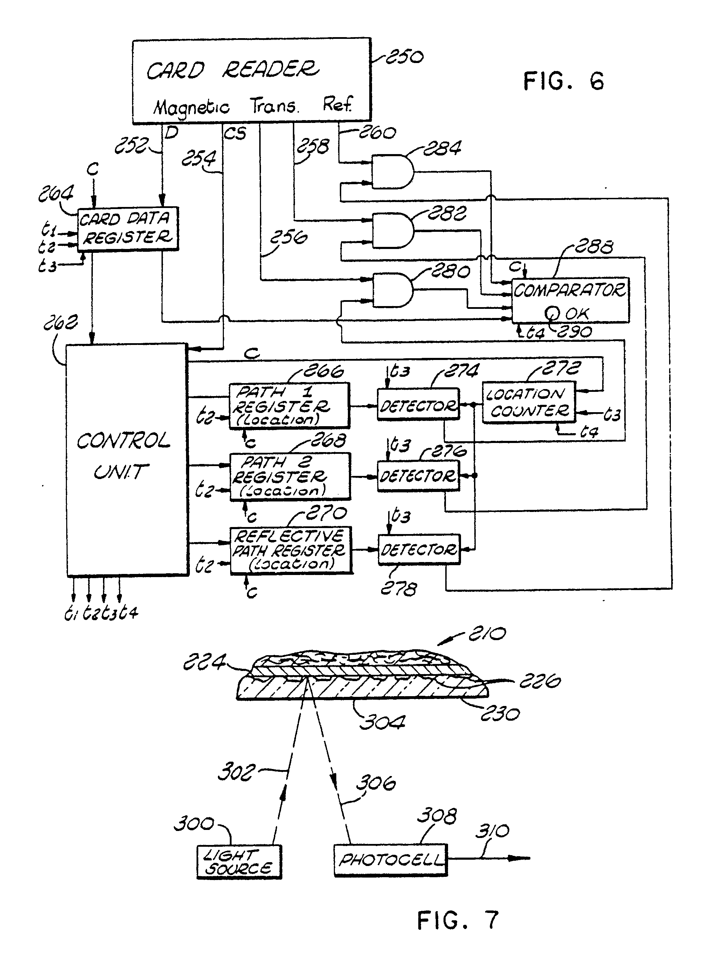

In the described embodiment, the first section 238 of the data track 236 specifies the data locations D1-D6 of interest for the card. Following the section 238 (left to right) in the data track 236 is a section 240 for recording the data characters, i.e. the characteristics sensed at the locations D1-D6. In the operation of the system, the data in the magnetic location 238 and the clock track 234 locate the points or locations D1-D6 for sensing. The characteristics observed at such points or locations on the card 210 are then compared with recorded data characters provided from the section 240 which were recorded at the time of the initial sensing. Of course, on any selected basis of criteria, as explained above, the comparison will either indicate the card's authenticity or failure of confirmation. Consideration will now be directed to the structure of FIGURE 6 which performs the test as generally indicated above.

A card reader 250 (top left) may take any of a variety of forms for sensing the data as described above from the card 210 (FIGURE 1). Specifically, the card reader 250 incorporates: (1) apparatus for sensing translucency along the paths 220 and 222, (2) structure for reading the magnetic stripe 216 as well known in the prior art, (3) apparatus for sensing reflectivity along the band 218, and (4) an analog-to-digital converter to convert observed analog translucency and reflectivity readings to a digital format. A form of reflectivity sensing apparatus is disclosed in detail below. The card 210 may be automatically moved through the card reader 250. Alternatively, the card reader 250 may be a manually operated sensing device wherein a person simply pushes the card 210 through an elongate slot. A form of the latter device for sensing a magnetic stripe is disclosed in U. S. Patent No 3,914,789 (Cocker, Jr. et al).

The outputs from the card reader 250 include: signals D and CS representative of data and clock signals from the magnetic stripe 216 (carried on lines 252 and 254); data representative of the translucency along paths 220 and 222 (carried in lines 256 and 258); and a reflectivity signal sensed along the band 218 (carried in line 260).

The clock signals CS (line 254) are applied to a control unit 262 for developing refined clock signals C. The clock signals C are supplied to each of the functional components of the system; however, in the interest of simplification, connection lines are not illustrated.

The operating sequence of the system of FIGURE 6 is controlled and regulated by timing signals t1-t4 from the control unit 262 along with the clock signals C. The timing signals t1-t4 are developed by the control unit 262, using the clock signals C and the data signals D.

After the initializing operation, the binary timing signal t1 is applied to a card data register 264. Under the control of the signals t1 and C, the register 264 receives the record from the data track 236 (FIGURE 5). Of course, the magnetic data stripe information may vary as suggested above; however, the portion thereof pertinent to the embodiment of FIGURE 6 is utilized to specify the locations D1-D6 and the characteristic measurements at such locations. The data locations from the section 238 (FIGURE 5) are specified by signals applied from the register 264 to the control unit 262 during timing signal t2.

Some decoding may be performed on the data location signals; however, depending upon the format employed, any of a variety of specific signals may be supplied from the control unit 262 during tie interval of binary timing signal t2, to specify the data locations D1-D6.

Signals representative of the locations D1 and D2 (for path 220) are provided from the control unit 262 to a register 266. Somewhat similarly, location signals for the recording path 222 are placed in a register 268 and location signals for the reflectivity band 218 are provided in a register 270. As a consequence, after the transfer during the interval of timing signal t2, the register 266 contains two values to indicate the locations D1 and D2 of the translucency track 1, i.e., path 220. Somewhat similarly, the register 268 contains values indicative of the locations D3 and D4 on the translucency track 2, i.e., path 222. Finally, the register 270 holds values representative of the locations D5 and D6 along the reflectivity band 218.

In essence, the values from the registers 266, 268, and 270 are tested against the accumulated values in a clock pulse counter 272 to indicate the instants when the locations D1-D6 are being sensed to thereby command selection of the current values detected from the sensing as the selected data characters.

The instant position of the card 210 (as it is sensed in the card reader 250) is manifest by a location counter 272 which receives clock pulses during the timing interval of the signal t3. Essentially, the tally or accumulated count in the counter 272 indicates the relative displacement of a card 210 in the card reader 250, thereby indicating the position of the sensing apparatus with respect to the locations D1-D6.

The accumulated count value from the location counter 272 is applied to digital coincidence detectors 274, 276, and 278 which also receive timing signals t3 and signal-represented values from the registers 266, 268, and 270. Upon detecting a coincidence between received sets of signals, each detector 274, 276, and 278 provides the high level of a binary output signal to qualify a gate indicating that a critical location (D1, D2, D3, D4, D5, or D6) is currently being sensed and the representative signal is to be gated for consideration.

Output signals from the detectors 274, 276, and 278 are connected respectively to "and" gates 280, 282, and 284. The "and" gates 280 and 282 receive the translucency signals in lines 256 and 258 respectively and are qualified at the critical point in time (space) to supply the observed values at the locations D1, D2, D3, and D4 (see FIGURE 1). The "and" gate 284 receives the reflected signal value and is qualified at the instants for observation of locations D5 and D6.

The signals manifesting observations from the locations D1-D6 are supplied from the "and" gates 280, 282, and 284 to a comparator 288 which is also connected to receive signals from the register 264 representative of the data characters from section 240 (FIGURE 5) of the magnetic stripe 218.

As described above, the comparator 288 receives six signal-represented values digitally representative of prior observations of the select characteristics at locations D1-D6 from the register 264. The comparator 288 also receives fresh data of the same nature from a current sensing of the card 210 through the gates 280, 282, and 284. The comparator 288 then compares the two sets of data (recorded and fresh) in accordance with a predetermined logic pattern and utilizes the comparison on a statistical basis for indicating the authenticity of the card in question as described in detail above. Of course, the authenticator 288 may utilize a variety of comparative techniques. If a card 210 in question is resolved to be authentic or genuine, then a lamp 290 on the comparator is illuminated. Alternately, the comparing means may simply comprise two displays or registers with the operator then making a visual observation of the degree of coincidence between freshly sensed and prerecorded values.

To consider a specific examplary operation of the system of FIGURE 5, assume the existence of a card 210 precisely as illustrated in FIGURE 1 with the data locations D1-D6 sensed and appropriately recorded on the magnetic stripe 216 along with other specific data. Further assume that the card 210, so recorded, is presented for authentication by an apparatus constructed in accordance with FIGURE 6. By way of example, assume the following relative characteristic values exist at the data locations:

| D1 | 3 |
|----|---|
| D2 | 7 |
| D3 | 2 |
| D4 | 5 |
| D5 | 1 |
| D6 | 6 |

With the movement of the assumed card 210 through the card reader 250, it is scanned from left to right (as illustrated) so that sensors pass over each of the horizontal sections of interest. At the outset of such scanning, the magnetic stripe 216 is sensed for an initializing operation in the control unit 262 as well known in the prior art for synchronizing the sensed clock signals CS with respect to the production of the timing clock signal C. After the brief initializing period, the clock pulses C are provided with space-related regularity throughout the balance of the card scanning operation.

After initializing, data is sensed by the card reader from the magnetic track 236 (FIGURE 5). Specifically, values are provided from the first section 238 which specify the locations D1-D6 as by a numerical count of displacement along the card. Such data, along with the characteristic data from the track 236 is set in the card data register 264.

The control unit 262 receives the signal-represented data locations from the register 264, performs processing operations, and during the interval of the timing signal t2 sets the registers 266, 268, and 270 with two values each (in this example), which are independently supplied to the detectors 274, 276, and 278 during the interval of the timing signal t3. Specifically, the register 266 is set with values which are measured from a timing mark on the magnetic stripe 216 to initiate the interval of timing signal t3. Essentially, the data locations in the register 266 indicate the number of clock signals CS which lie in a horizontal path and offset the locations D1 and D2 from the starting or timing mark. Similar signal-represented values are set in the register 268 for the locations D3 and D4 as well as in the register 270 for the locations D5 and D6.

During the interval of operation (t3) the data values in each of the registers 266, 268, and 270 are continually compared with the incrementing number in the counter 272. That is, the counter 272 is actuated to count clock pulses C from the control unit 262 from the beginning of the timing signal t3. Thus, during the interval of the timing signal t3, the counter 272 specifies horizontal offsets for the locations D1-D6, which may be used according to the card format.

When the counter 272 attains a number equal to the horizontal offset for each of the locations D1-D6, one of the detectors 274, 276, or 273 signifies such an occurrence by qualifying one of the gates 280, 282, or 284 with the result that the observed analog signal (translucency or reflectivity sample) is gated to the comparator 288 perhaps to represent values of:

| D1 | 3 |
|----|---|
| D2 | 8 |
| D3 | 2 |
| D4 | 5 |
| D5 | 2 |
| D6 | 6 |

At the conclusion of the scanning of the card 210, currently sensed characteristic values (3, 8, 2, 5, 2, 6) from the locations D1-D6 are registered in the comparator 288. Also, the data from the magnetic stripe section 240 (D1-D6) are also registered in the comparator, i.e., 3, 7, 2, 5, 1, 6. During the interval t4, the two sets of data are compared for a degree of coincidence. Normally, any significant degree of coincidence between the freshly observed data and the previously observed data from the magnetic stripe will indicate that the card 210 is genuine and authentic. The small differences indicated in the exemplary data would likely be acceptable in most applications. However, in documents as the card 210, a higher degree of coincidence may be demanded to avoid acceptance of a modified document. In that regard, any change in the print 212 (FIGURE 1) or the likeness 214 would likely be manifest by significant differences in the signals observed versus the signals recorded regarding the locations D1, D2, and D4.

While the above system selects the desired signals by direct gating, it will be apparent to those skilled in the art that an entire scanning of data could be sensed, sampled and converted as a basis for selective comparisons. Also, many different kinds of comparison techniques might well be employed, as for example amplitude ordering and mathematical manipulation and range comparisons, e.g., sum of squares comparisons.

The translucency sensing in the system of FIGURE 6 may be as described in European Patent No 0 054 071. As for the reflectivity sensing, an exemplary structure is illustrated in FIGURE 7. Specifically, the card 210 (illustrated fragmentarily) is moved transversely (to the right for example) in relation to a light source 300 which may, for example, comprise a low-power infrared laser to provide a beam 302 that is reflected front the card 210 as illustrated. A fragmentary or reflected beam 306 is detected by a photocell 308 which provides a representative analog signal in a conductor 310. Note that in the plane of the drawing of FIGURE 7, i.e. the plane defined by the light source 300, the photocell 308 and the point of light incidence on the card 210 are at right angles to the motion of the card 210.

As the card 210 is effectively scanned by the beam 302, considerable variation is imparted to the beam 306 in view of the sand-like particles 226 which obscure the foil 224. As a consequence, a random measurable but not practicably duplicable characteristic is provided.

In a refined embodiment of the structure of FIGURE 7 the illustrated system is duplicated for dimensional sensing operation. Specifically, a second transverse light source and photocell reflectivity reader are placed with interchanged positional relationship to the source 300 and cell 308. In that manner, a single path is scanned from two different dimensional viewpoints. Consequently, the dimensional path has a sensed characteristic that would be substantially immune from reproduction using any known photographic or other techniques. Other reflecting techniques, as for example backscattering, may well be adopted for use in a system as disclosed herein.

**Claims**

1. An authenticator device (210 FIG. 1) for verifying the authenticity of a product, person, document or other subject, in which a sheet medium (215) has a region (218) that occupies at least part of the sheet and includes particles (226 FIG. 4) distributed therein for providing variation from one location to another within the region (218) of response to incident light, and there is associated with the sheet medium (215) a machine-readable representation (216) of this response as measured at one specific location at least (D5; D6), of the region (218), characterised in that the machine-readable representation (216) is borne by the sheet medium (215), that the response to incident light is produced by a reflecting surface (224 FIG. 4) of the sheet medium (215), that the particles are sand-like particles (226) carried by the reflecting surface (224), and that the sand-like particles (226) modify the measurable reflectivity from one location to another (D5, D6) within said region (218) by obscuring the reflecting surface (224).

2. An authenticator device according to Claim 1 wherein the reflecting surface is provided by a layer of foil (224) on the sheet medium (215).

3. An authenticator device according to Claim 1 or Claim 2 wherein the machine-readable representation is recorded on the sheet medium (215) in the form of a magnetic recording (216).

4. An authenticator device according to any one of Claims 1 to 3 wherein the sheet material (215) has a translucency that varies from one location to another of the device outside said region (218), and the medium bears a machine-readable representation (216) of the translucency as measured at specific locations (D1-D4) of the medium (215) outside said region (218).

5. An authenticator device according to any one of Claims 1 to 4 wherein the sheet medium is of paper or other, paper-like material (215).

6. A method of producing an authenticator device according to any one of Claims 1 to 5 characterised in that the production method includes the steps of specifying at least one location (D5; D6) of the region (218), measuring the reflectivity at that location (D5; D6), and then recording a representation of the measure of reflectivity obtained, on the sheet medium (215).

7. A method according to Claim 6 wherein data in accordance with the measure of reflectivity is cryptographically encoded before being recorded on the sheet medium (215).

8. A method according to Claim 6 or Claim 7 including the step of recording on the sheet medium (215) data indicative of the location (D5; D6) to which the measure of reflectivity relates.

9. A method of verification of an authenticator device according to any one of Claims 1 to 5 characterised in that the verification method includes the steps of machine-reading (252 FIG. 6) from the device (210) the said representation of measured reflectivity borne by the sheet medium (215), freshly measuring (260 FIG. 6) the reflectivity at one specific location at least (D5: D6), of said region (218), and then comparing (288 FIG. 6) the freshly-obtained measure of reflectivity (260) with the representation read out (252) from the device (210).

10. A method according to Claim 9 wherein the location from which the measure of reflectivity is freshly obtained, is determined by data (270 FIG. 6) read from the device (210).

**Revendications**

1. Dispositif authentificateur (210, figure 1) destiné à vérifier l'authenticité d'un produit, d'une personne, d'un document ou d'un autre sujet, dans lequel une feuille de support (215) comporte une zone (218) qui occupe au moins une partie de la feuille et dans laquelle des particules (226, figure 4) sont distribuées de façon à présenter une variation d'un emplacement à un autre dans la zone (218) de la réponse à une lumière incidente, et il est associé à la feuille de support (215) une représentation assimilable par machine (216) de cette réponse telle que mesurée en un emplacement spécifique au moins (D5 ; D6) de la zone (218), caractérisé en ce que la représentation assimilable par machine (216) est portée par la feuille de support(215), en ce que la réponse à la lumière incidente est produite par une surface réfléchissante (224, figure 4) de la feuille de support (215), en ce que les particules sont des particules (226) analogues à du sable portées par la surface réfléchissante (224), et en ce que les particules (226) analogues à du sable modifient la réflectivité mesurable d'un emplacement à un autre (D5, D6) dans ladite zone (218) en obscurcissant la surface réfléchissante (224).

2. Dispositif authentificateur selon la revendication 1, dans lequel la surface réfléchissante est présentée par une couche d'une feuille mince (224) sur la feuille de support (215).

3. Dispositif authentificateur selon la revendication 1 ou la revendication 2, dans lequel la représentation assimilable par machine est enregistrée sur la feuille de support (215) sous la forme d'un enregistrement magnétique (216).

4. Dispositif authentificateur selon l'une quelconque des revendications 1 à 3, dans lequel la matière en feuille (215) présente une translucidité qui varie d'un emplacement à un autre du dispositif à l'extérieur de ladite zone (218), et le support porte une représentation assimilable par machine (216) de la translucidité telle que mesurée en des emplacements spécifiques (D1-D4) du support (215) à l'extérieur de ladite zone (218).

5. Dispositif authentificateur selon l'une quelconque des revendications 1 à 4, dans lequel le support en feuille est en papier ou autre matière (215) analogue à du papier.

6. Procédé de production d'un dispositif authentificateur selon l'une quelconque des revendications 1 à 5, caractérisé en ce que le procédé de production comprend les étapes qui consistent à spécifier au moins un emplacement (D5 ; D6) de la zone (218), à mesurer la réflectivité en cet emplacement (D5 ; D6), puis à enregistrer une représentation de la mesure de la réflectivité obtenue, sur la feuille de support (215).

7. Procédé selon la revendication 6 dans lequel des données conformes à la mesure de la réflectivité sont codées de façon cryptographique avant d'être enregistrées sur la feuille de support (215).

8. Procédé selon la revendication 6 ou la revendication 7, comprenant l'étape qui consiste à enregistrer sur la feuille de support (215) des données représentatives de l'emplacement (D5 ; D6) auquel la mesure de réflectivité a trait.

9. Procédé de vérification d'un dispositif authentificateur selon l'une quelconque des revendications 1 à 5, caractérisé en ce que le procédé de vérification comprend les étapes qui consistent à assimiler par machine (252, figure 6) à partir du dispositif (210) ladite représentation de la réflectivité mesurée portée par la feuille de support (215), à mesurer une nouvelle fois (260, figure 6) la réflectivité en un emplacement spécifique au moins (D5 ; D6), de ladite zone (218), puis à comparer (288, figure 6) la mesure nouvellement obtenue de la réflectivité (260) avec la représentation assimilée (252) à partir du dispositif (210).

10. Procédé selon la revendication 9, dans lequel l'emplacement à partir duquel la mesure de réflectivité est nouvellement obtenue est déterminé par des données (270, figure 6) assimilées à partir du dispositif (210).

**Patentansprüche**

1. Authentifizierer (210 Fig. 1) zum Feststellen der Authentizität eines Erzeugnisses, einer Person, eines Dokuments oder eines anderen Subjekts, wobei ein blattförmiges Medium (215) einen Bereich (218) aufweist, der wenigstens einen Teil des Blattes einnimmt und Teilchen (226 Fig. 4) aufweist, die darin verteilt sind, um als Reaktion auf einfallendes Licht innerhalb des Bereiches (218) zwischen den einzelnen Orten eine Variation zu bewirken und wobei, verbunden mit dem blattförmigen Medium (215), eine maschinenlesbare Darstellung (216) dieser Reaktion vorhanden ist, die wenigstens an einem spezifischen Ort (D5; D6) des Bereichs (218) gemessen wurde, **dadurch gekennzeichnet**, daß die maschinenlesbare Darstellung (216) durch das blattförmige Medium (215) hervorgebracht wird, daß die Reaktion auf das einfallende Licht durch eine reflektierende Oberfläche (224 Fig. 4) auf dem blattförmigen Medium (215) erzeugt wird, daß die Teilchen sandähnliche Teilchen (226) sind, die von der reflektierenden Oberfläche (224) getragen werden, und daß die sandähnlichen Teilchen (226) das meßbare Reflexionsvermögen von Ort zu Ort (D5; D6) innerhalb des Bereiches (218) durch Verdunkeln der reflektierenden Oberfläche (224) modifizieren.

2. Authentifizierer nach Anspruch 1, wobei die reflektierende Oberfläche einen Spiegelbelag (224) auf dem blattförmigen Medium (215) aufweist.

3. Authentifizierer nach Anspruch 1 oder 2, wobei die maschinenlesbare Darstellung auf dem blattförmigen Medium (215) in Form einer Magnetaufzeichnung (216) aufgezeichnet ist.

4. Authentifizierer nach einem der Ansprüche 1 bis 3, wobei das Blattmaterial (215) eine Lichtdurchlässigkeit aufweist, die auf dem Gerät außerhalb des Bereichs (218) von Ort zu Ort variiert, und das Medium eine maschinenlesbare Darstellung (216) der Lichtdurchlässigkeit, die an verschiedenen Orten (D1-D4) des Mediums (215) außerhalb des Bereichs (218) gemessen wurde, aufweist.

5. Authentifizierer nach einem der Ansprüche 1 bis 4, wobei das blattförmige Medium aus Papier oder einem anderen papierähnlichen Material (215) besteht.

6. Verfahren zum Herstellen eines Authentifizierer nach einem der Ansprüche 1 bis 5, **dadurch gekennzeichnet**, daß die Herstellungsmethode die Schritte einschließt: Spezifizieren wenigstens eines Ortes (D5; D6) des Bereiches (218), Messen des Reflexionsvermögens an diesem Ort (D5; D6), und anschließendes Aufzeichnen einer Darstellung der erhaltenen Messung des Reflexionsvermögens auf dem blattförmigen Medium (215).

7. Verfahren nach Anspruch 6, wobei Daten in Übereinstimmung mit dem Maß des Reflexionsvermögens chiffriert kodiert werden, bevor sie auf dem blattförmigen Medium (215) aufgezeichnet werden.

8. Verfahren nach Anspruch 6 oder 7, mit einem Schritt zum Aufzeichnen von Daten auf dem blattförmigen Medium (215), die den Ort (D5; D6) anzeigen, auf den sich das Maß des Reflexionsvermögens bezieht.

9. Verfahren zum Authentifizieren mit einem Authentifizierer nach einem der Ansprüche 1 bis 5, **gekennzeichnet** durch die folgenden Schritte: Maschinenlesen (252 Fig. 6) der Darstellung des gemessenen Reflexionsvermögens von dem Authentifizierer (210), die sich auf dem blattförmigen Medium (215) befindet; erneutes Messen (260 Fig. 6) des Reflexionsvermögens an wenigstens einem spezifischen Ort (D5; D6) des Bereichs (218); und anschließend Vergleichen (288 Fig. 6) des erneut erhaltenen Maßes des Reflexionsvermögens (260) mit der Darstellung, die aus dem Authentifizierer (210) ausgelesen wurde (252).

10. Verfahren nach Anspruch 9, wobei der Ort, von dem das Maß des Reflexionsvermögens erneut erhalten wurde, durch Daten (270 Fig. 6) bestimmt wird, die aus dem Gerät (210) ausgelesen wurden.

FIG. 1

228

215

FIG. 2

230

228

215

216

FIG. 3

230

228

224

218

226

215

230

FIG. 4

216

238   236   240

INITIALIZING

DATA
LOCATIONS

DATA CHARACTER

------- CLOCK — CS —

232

234

FIG. 5

FIG. 6

CARD READER — 250

Magnetic Trans. Ref.

252 D    254 CS    258    260

C    264

CARD DATA REGISTER
$t_1$
$t_2$
$t_3$

262

CONTROL UNIT

$t_1$ $t_2$ $t_3$ $t_4$

256

284

282

280

288

COMPARATOR
○ OK
$t_4$    290

C

266
PATH 1 REGISTER (Location)
$t_2$
c

$t_3$    274
DETECTOR

272
LOCATION COUNTER
$t_3$
$t_4$

268
PATH 2 REGISTER (Location)
$t_2$
c

$t_3$    276
DETECTOR

270
REFLECTIVE PATH REGISTER (Location)
$t_2$
c

$t_3$
DETECTOR
278

210

224

226
230

304

302

306

300

308    310

LIGHT SOURCE

PHOTOCELL

FIG. 7